Europäisches Patentamt

European Patent Office

Office eurcpéen des brevets

(11) Veröffentlichungsnummer: **0 237 052**
**A1**

## EUROPÄISCHE PATENTANMELDUNG

(21) Anmeldenummer: **87103521.8**

(22) Anmeldetag: **11.03.87**

(51) Int. Cl.⁴: **C01B 21/14**

(30) Priorität: **14.03.86 DE 3608495**

(43) Veröffentlichungstag der Anmeldung:
**16.09.87 Patentblatt 87/38**

(84) Benannte Vertragsstaaten:
**BE CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Fuchs, Hugo, Dr.**
**Egellstrasse 28**
**D-6700 Ludwighafen(DE)**
Erfinder: **Neubauer Gerald, Dr.**
**Mozartstrasse 24**
**D-6940 Weinheim(DE)**
Erfinder: **Ritz, Josef, Dr**
**Osloer Weg 8**
**D-6700 Ludwigshaven(DE)**
Erfinder: **Thomas, Erwin**
**Borngasse 12**
**D-6713 Freinsheim(DE)**
Erfinder: **Weiss, Franz-Josef, Dr.**
**Schilfweg 1**
**D-6708 Neuhofen(DE)**

(54) **Verfahren zur Herstellung von wässrigen Lösungen von Hydroxylamin.**

(57) Verfahren zur Herstellung von wäßrigen Lösungen von Hydroxylamin, dadurch gekennzeichnet, daß man wäßrige Lösungen von Hydroxylammoniumsalzen über basische Ionenaustauscher leitet und eine wäßrige Lösung von Hydroxylamin erhält.

## Verfahren zur Herstellung von wäßrigen Lösungen von Hydroxylamin

Für spezielle Zwecke werden in der Technik wäßrige Lösungen von freiem Hydroxylamin in höherer Konzentration verlangt. Aus der DE-AS 1 247 282 ist bereits ein Verfahren bekannt, bei dem man alkoholische Lösungen von freiem Hydroxylamin durch Umsetzen von Hydroxylammoniumsulfat mit Ammoniak und Alkohol als Lösungsmittel und Abtrennen des Ammoniumsulfats erhält. Für eine Reihe von Verwendungszwecken sind jedoch alkoholische Lösungen nicht brauchbar. Andererseits müssen beim Transport von solchen Lösungen besondere Vorkehrungen wegen ihrer Brennbarkeit getroffen werden. Das gleiche gilt für das aus der EP-Anmeldung 108 294 beschreibene Verfahren bei dem man alkoholische Lösungen von freiem Hydroxylamin durch Umsetzen von Hydroxylammoniumsulfat mit methanolischer Alkalilauge und Abtrennen des anfallenden Alkalisulfat erhält. Es wurde auch schon versucht, wäßrige Lösungen von freiem Hydroxylamin durch Elektrodialyse von wäßrigen Lösungen von Hydroxylammoniumsulfat in Elektrolysezellen mit semipermeablen Trennwänden herzustellen. Ein solches Verfahren ist jedoch technisch aufwendig und hat bislang keinen Eingang in der Technik gefunden. Es wurde auch vorgeschlagen, durch Umsetzung von wäßrigen Hydroxylammoniumsulfatlösungen mit Bariumoxid, wäßrige Lösungen von freiem Hydroxylamin zu erhalten. Hierbei tritt jedoch das Problem der Bariumsulfatfiltration auf.

Es war deshalb die technische Aufgabe gestellt ein Verfahren zur Herstellung von wäßrigen Lösungen von Hydroxylamin zur Verfügung zu stellen das einfach durchführbar ist und bei dem man wäßrige Lösungen mit einem variierbaren Gehalt an Hydroxylamin erhält.

Diese Aufgabe wird gelöst in einem Verfahren zur Herstellung von wäßrigen Lösungen von Hydroxylamin wobei man eine wäßrige Hydroxylammoniumsalzlösung über einen basischen Ionenaustauscher leitet und eine wäßrige Lösung von Hydroxylamin erhält.

Das neue Verfahren hat den Vorteil, daß es wenig aufwendig und auf einfache Weise durchführbar ist. Ferner hat das neue Verfahren den Vorteil, daß man wäßrige Lösungen von Hydroxylamin mit variablem Gehalt an Hydroxylamin erhält. Zudem hat das neue Verfahren den Vorteil, daß es mit guten Ausbeuten verläuft. Schließlich hat das neue Verfahren den Vorteil, daß es einen geringen Gehalt an Fremdionen in der wäßrigen Hydroxylaminlösung ermöglicht.

Erfindungsgemäß geht man von wäßrigen Lösungen von Hydroxylammoniumsalzen wie Hydroxylammoniumsulfat, -chlorid, -nitrat, -phosphat oder niederen Fettsäuren wie Acetat aus. Vorzugsweise verwendet man als Ausgangslösung eine wäßrige Hydroxylammoniumsulfatlösung. Die wäßrigen Lösungen haben in der Regel einen Gehalt von 20 bis 160 Hydroxylamin je Liter in Form ihrer Salze. Besonders bewährt hat sich Hydroxylammoniumsulfat mit einem Gehalt an Ammoniumionen von < 500 ppm vorzugsweise < 100 ppm. Vorteilhaft verwendet man Hydroxylammoniumsulfat mit einem Gehalt an Ammoniumionen von 50 bis 300 ppm. Hydroxylammoniumsulfat mit einem geeigneten Gehalt an Ammoniumionen erhält man durch mehrfaches Umkristallisieren von Hydroxylammoniumsulfat aus Wasser. Ein geeignetes Verfahren ist z.B. das mehrfache Umkristallisieren aus wäßriger Lösung bei dem man die wäßrige Lösung bei einer Temperatur von 48 bis 80°C unter einem Druck von 50 bis 400 mbar eindampft, reineres Hydroxylammoniumsulfat auskristallisiert und abtrennt. Das Umkristallisieren wird vorteilhaft 2 bis 3 mal wiederholt.

Ferner ist es vorteilhaft, wenn man auf Ausschluß von molekularem Sauerstoff achtet. Vorzugsweise hält man deshalb in der wäßrigen Lösung von Hydroxylammoniumsalzen einen Gehalt an molekularem Sauerstoff von < 20 ppm ein. Dies wird erreicht indem man durch die wäßrige Lösung von Hydroxylammoniumsalzen, Inertgas, z.B. Stickstoff, Argon oder Kohlendioxid, insbesondere Stickstoff mit einem Gehalt von < 10 ppm molekularem Sauerstoff in feiner Verteilung z.B. für einen Zeitraum von 10 bis 60 min leitet.

Zudem ist es vorteilhaft, wenn man den wäßrigen Ausgangslösungen Stabilisatoren insbesondere Chelat bildende Stabilisatoren zusetzt. Geeignete Stabilisatoren sind beispielsweise 8-Hydroxychinaldin, Flavone, wie Morine, Hydroxychinoline wie 8-Hydroxychinolin, Hydroxyanthrachinon, wie Chinalizarin die gegebenenfalls in Kombination mit Polyhydroxyphenolen, wie Pyrogallol verwendet werden. Weitere geeignete Stabilisatoren sind Benzonitril, Benzamidoxim, N-Phenyl-N-Hydroxythioharnstoff, Reduktone und/oder Reduktonate, z.B. 2,3-Di-dehydrohexono-1,4-lacton, ferner Alkalisalze der Ethylendiamintetraessigsäure. Die Konzentration der Stabilisatoren, bezogen auf Hydroxylammoniumsalze beträgt vorteilhaft $5.10^{-4}$ bis 1 Gew.-% insbesondere $5 \cdot 10^{-3}$ bis $5 \cdot 10^{-2}$ Gew.-%. Besonders bewährt haben sich als Stabilisatoren 8-Hydroxychinaldin und 8-Hydroxychinolin.

Die wäßrigen Lösungen von Hydroxylammoniumsalzen werden über basische Ionenaustauscher geleitet. Besonders bewährt haben sich - schwachbasische Ionenaustauscher. Solche Ionenaustauscher sind vernetzte Polymere mit primären, sekundären oder tertiären Aminogruppen. Geeignete Ionenaustauscher sind beispielsweise aufgebaut aus vernetztem Polystyrol oder Polyacrylat, das primäre, sekundäre oder tertiäre Amminogruppen enthält. Die verwendeten Ionenaustauscher werden wie üblich vor ihrer Verwendung durch Behandeln mit wäßriger Ammoniaklösung in ihre aktive Form übergeführt.

Die Behandlung wird vorteilhaft bei einer Temperatur < 25°C, z.B. bei einer Temperatur von 0 bis 22°C durchgeführt. Sobald der Ionenaustauscher erschöpft ist, was sich leicht durch einen auftretenden Gehalt an Anionen wie Sulfat im Eluat feststellen läßt, wird der Ionenaustauscher durch Behandeln mit wäßriger Ammoniaklösung reaktiviert. Es hat sich deshalb als zweckmäßig erwiesen, Ionenaustauscherzonen paarweise anzuwenden, wobei man die Ionenaustauscherzonen wechselweise mit Hydroxylammoniumsulfatlösung beaufschlagt und regeneriert.

Um Verluste an Hydroxylamin zu vermeiden, hat es sich als zweckmäßig erwiesen vor dem Reaktivieren durch Nachwaschen des Ionenaustauschers mit Wasser restliches Hydroxylamin auszuwaschen.

Um höhere Konzentrationen an Hydroxylamin zu erzielen, hat es sich bewährt, wenn man in der so erhaltenen Lösung von Hydroxylamin wiederum Hydroxylammoniumsalze löst und über den basischen Ionenaustauscher leitet und eine wäßrige Hydroxylaminlösung höherer Konzentration erhält. Dieser Vorgang kann mehrfach, z.B. 1 bis 5 mal wiederholt werden. Hierdurch ist es möglich, wäßrige Lösungen mit einem Gehalt von z.B. 10 bis 30 Gew.% an Hydroxylamin zu erzielen.

Falls es erwünscht ist möglichst rasch einen hohen Gehalt an Hydroxylamin zu erreichen, unterteilt man das Eluat in mehrere Fraktionen, wobei man die Fraktionen mit dem höchsten Gehalt an Hydroxylamin wiederum mit Hydroxylammoniumsalzen versetzt und über einen basischen Ionenaustauscher leitet.

Wäßrige Lösungen von Hydroxylamin, die nach dem Verfahren der Erfindung erhältlich sind, eignen sich für die Umsetzung mit reinen Säuren zur Herstellung hochreiner Hydroxylammoniumsalze als Regler bei Polymerisationen oder als Reaktionsmittel zur Herstellung spezieller, organischer oder anorganischer Zwischenprodukte.

Das Verfahren nach der Erfindung sei an folgendem Beispiel veranschaulicht:

Beispiel

Ein Glasrohr vom Durchmesser 24 mm, welches am unteren Ende mit einer Fritte versehen ist, enthält 600 ml eines feuchten, schwach basischen Ionenaustauschers aus vernetztem Polyacrylat mit Aminogruppen. Die Schütthöhe beträgt 1,3 m. Der Ionenaustauscher wird zunächst mit einer 2,5 % (m/m) wäßrigen Ammoniaklösung aktiviert und so in die OH-Form überführt.

73,8 g Hydroxylammoniumsulfat (das entspricht 29,7 g freiem Hydroxylamin) werden in 172 g Wasser gelöst. (Die Lösung soll weder mit Luftsauerstoff noch mit Schwermetallionen verunreinigt werden.) Bei einer Temperatur von 20°C läßt man diese Lösung über den Ionenaustauscher laufen. Hierbei werden die Sulfationen am Ionenaustauscher gebunden, während am unteren Ende der Ionenaustauschersäule eine wäßrige, freies Hydroxylamin enthaltende Lösung austritt. Durch Nachwaschen des Austauschers mit Wasser wird das gesamte Hydroxylamin in das Eluat verdrängt.

Hierbei lassen sich folgende Fraktionen erhalten:

1. 100 ml mit einer Gesamtmenge von 1,3 g Hydroxylamin

2. 100 ml mit einer Gesamtmenge von 9,3 g Hydroxylamin

3. 100 ml mit einer Gesamtmenge von 12,5 g Hydroxylamin

4. 100 ml mit einer Gesamtmenge von 4,7 g Hydroxylamin

5. 100 ml mit einer Gesamtmenge von 1,6 g Hydroxylamin

6. 100 ml mit einer Gesamtmenge von 0,3 g Hydroxylamin

Faßt man die Fraktionen 2 und 3 zusammen, so erhält man eine 10,9 % (m/m) wäßrige Hydroxylamin-Lösung, d.s. 73 % der eingesetzten Hydroxylaminmenge. Unter Berücksichtigung der verdünnten Lösungen erzielt man eine quantitative Ausbeute.

200 ml der Fraktionen 2 und 3, mit einer Hydroxylaminmenge von 21,8 g werden zum Lösen von weiteren 73,8 g Hydroxylammoniumsulfat verwendet. Diese Lösung mit einem Gesamthydroxylamingehalt von 51,5 g wird -wie beschrieben -über den Ionenaustauscher geleitet. Die Temperatur soll 20°C nicht übersteigen.

Als Eluat-nach dem Verdrängen des Hydroxylamins aus der Austauschersäule -erhält man folgende Fraktionen:

1. 100 ml mit einer Gesamtmenge von 1,6 Hydroxylamin

2. 100 ml mit einer Gesamtmenge von 14,7 g Hydroxylamin

3. 100 ml mit einer Gesamtmenge von 22,1 g Hydroxylamin

4. 100 ml mit einer Gesamtmenge von 10,5 g Hydroxylamin

5. 100 ml mit einer Gesamtmenge von 2,6 g Hydroxylamin

Faßt man die Fraktionen 2 und 3 zusammen, so erhält man 71 % der eingesetzten Hydroxylaminmenge als 18,4 % (m/m) wäßrige Lösung.

Bei Fortsetzung dieses Verfahrens lassen sich Hydroxylamin-Konzentrationen bis zu ca. 30 % - (m/m) erhalten.

**Ansprüche**

1. Verfahren zur Herstellung von wäßrigen Lösungen von Hydroxylamin, dadurch gekennzeichnet, daß man wäßrige Lösungen von Hydroxylammoniumsalzen über basische Ionenaustauscher leitet und eine wäßrige Lösung von Hydroxylamin erhält.

2. Verfahren nach Anspruch 1, dadurch gekennzeichnet, daß man schwach basische Ionenaustauscher anwendet.

3. Verfahren nach den Ansprüchen 1 und 2, dadurch gekennzeichnet, daß man eine Temperatur < 25°C einhält.

4. Verfahren nach den Ansprüchen 1 bis 3, dadurch gekennzeichnet, daß man einen Gehalt an molekularem Sauerstoff < 20 ppm einhält.

5. Verfahren nach den Ansprüchen 1 bis 4, dadurch gekennzeichnet , daß man der wäßrigen Hydroxylaminsalzlösung Chelat bildenden Stabilisatoren zusetzt.

6. Verfahren nach den Ansprüchen 1 bis 5, dadurch gekennzeichnet, daß man in der erhaltenen wäßrigen Lösung von Hydroxylamin erneut Hydroxylammoniumsalze löst und über einen basischen Ionenaustauscher leitet und eine wäßrige Lösung an Hydroxylamin mit höherer Konzentration erhält.

7. Verfahren nach den Ansprüchen 1 bis 6, dadurch gekennzeichnet, daß man von Hydroxylammoniumsulfat mit einem Gehalt von < 500 ppm Ammoniumionen ausgeht.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | ZEITSCHRIFT FÜR ANORGANISCHE UND ALLGEMEINE CHEMIE, Band 288, 1956, Seiten 28-35, Leipzig, DD; H. HOLZAPFEL: "Zur Darstellung von Lösungen freien Hydroxylamins durch Ionen-Austausch" * Seite 28: "Inhaltsübersicht"; Seite 32, Absatz 4; Seite 34, Absatz 3 * | 1,3 | C 01 B 21/14 |
| X | * Seite 31, Absatz 2 * ----- | 6 | |
| | | | **RECHERCHIERTE SACHGEBIETE (Int. Cl.4)** |
| | | | C 01 B 21/00 |

Der vorliegende Recherchenbericht wurde für alle Patentansprüche erstellt.

| Recherchenort | Abschlußdatum der Recherche | Prüfer |
|---|---|---|
| DEN HAAG | 15-05-1987 | BREBION J.CH. |